# EUROPÄISCHE PATENTANMELDUNG

(11) **EP 0 636 515 A1**
(43) Veröffentlichungstag der Anmeldung: **01.02.1995**
(21) Anmeldenummer: 93112310.3
(22) Anmeldetag: 31.07.1993
(51) Int. Cl.: B60R 9/06

(54) **Hecktragvorrichtung**

(30) Priorität: 02.07.1993 DE 4322016
(71) Anmelder: CARTEC GmbH AUTOMOBILTECHNIK, D-74078 Heilbronn (DE)
(72) Erfinder: Dörr, Klaus, D-74235 Erlenbach (DE)
(74) Vertreter: Jeck, Anton, Dipl.-Ing.

(57) **Zusammenfassung**

Die Erfindung betrifft eine Hecktragvorrichtung, insbesondere für Personenkraftfahrzeuge, bei denen eine über die Rückseite in Richtung der Fahrzeuglängsachse hinausragende Befestigungsvorrichtung mit mindestens einem Verlängerungselement (30) im Heckbereich anbringbar ist, wobei an den Verlängerungselementen (30) quer zur Fahrzeuglängsachse ein Träger (50) angebracht ist, der zur Aufnahme von Fahrrädern, Lasten usw. dient. Eine hohe Belastbarkeit, verbunden mit guter Sicherheit im Fahrbetrieb sowie eine leichte Handhabbarkeit des Heckträgers wird dadurch erreicht, daß mindestens eine, am Fahrzeug (10) angeordnete, in Richtung der Fahrzeughöhe von der oder den Befestigungsstellen der Befestigungsvorrichtung beabstandete Kopplungsvorrichtung (33) vorgesehen ist, an der mindestens eine Stützstrebe (40) festlegbar ist, daß die Stützstrebe (40) mit ihrem der Kopplungsvorrichtung (33) abgewandeten Endbereich mit dem Verlängerungselement (30) und/oder dem Träger (50) verbindbar ist, und daß der Träger (50) dabei an mindestens zwei in Querrichtung voneinander versetzten Stellen des Fahrzeuges (10) befestigt ist.

## Beschreibung

Die Erfindung betrifft eine Hecktragvorrichtung, insbesondere für Personenkraftfahrzeuge, bei denen eine über die Rückseite in Richtung der Fahrzeuglängsachse hinausragende Befestigungsvorrichtung mit mindestens einem Verlängerungselement im Heckbereich anbringbar ist, wobei an den Verlängerungselementen quer zur Fahrzeuglängsachse ein Träger angebracht ist, der zur Aufnahme von Fahrrädern, Lasten usw. dient.

Eine derartige Hecktragvorrichtung ist aus der EP 0 037 599 bekannt. An einer, einen Kugelkopf und einen daran angeschlossenen Kupplungshals aufweisenden Anhängerkupplung eines Personenkraftfahrzeuges ist eine Hecktragvorrichtung befestigt. Der Kugelkopf ist von einer an der Hecktragvorrichtung angeschweißten Kugelkopfaufnahme umgriffen und mit einer Spannschraube gegen Abheben gesichert. Um dem Kupplungshals ist eine Schelle verspannt gehalten und mit der Kugelkopfaufnahme fest verbunden.

Bei außermittigen Belastungen der Hecktragvorrichtung besteht die Gefahr, daß sie seitlich verdreht und die Last nicht sicher gehalten wird. Auch kann durch eine Verdrehung die Hecktragvorrichtung mit der Fahrbahn in Kontakt kommen und dadurch abreißen oder beschädigt werden. Diese Gefahr besteht hauptsächlich bei extremen Fahrbahnsituationen, beispielsweise an Bahnübergängen. Bei der Überfahrung der Gleise wird eine sehr starke Schwingung angeregt, was zu hohen Belastungen führt.

Es ist Aufgabe der Erfindung, eine Hecktragvorrichtung der eingangs erwähnten Art zu schaffen, die sicher anbringbar und dabei leicht handhabbar ist.

Diese Aufgabe der Erfindung wird dadurch gelöst, daß mindestens eine, am Fahrzeug angeordnete, in Richtung der Fahrzeughöhe von der oder den Befestigungsstellen der Befestigungsvorrichtung beabstandete Kopplungsvorrichtung vorgesehen ist, an der mindestens eine Stützstrebe festlegbar ist, daß die Stützstrebe mit ihrem der Befestigungsvorrichtung abgewandeten Endbereich mit dem Verlängerungselement und/oder dem Träger verbindbar ist, und daß der Träger dabei an mindestens zwei in Querrichtung voneinander versetzten Stellen des Fahrzeuges befestigt ist.

Mit den Stützstreben wird eine Abstützung des Trägers in vertikaler Richtung erreicht, während durch die Befestigung an mindestens zwei in Querrichtung versetzten Stellen des Fahrzeuges ein Verdrehen ausgeschlossen ist. Damit behält der Träger auch bei hohen Belastungen stabil seine Lage bei, auch wenn beispielsweise Lasten außermittig am Träger angreifen.

Wird zwischen dem Träger bzw. dem Verlängerungselement und der Stützstrebe ein großer Winkel gebildet, so sind über den Träger hohe Belastungen aufnehmbar und in die Stützstrebe ableitbar.

Die Hecktragvorrichtung ist leicht handhabbar und mit wenigen, einfach ausführbaren Handgriffen am Fahrzeug befestigbar.

Eine vorteilhafte Ausgestaltung der Hecktragvorrichtung ist dadurch gekennzeichnet, daß das Verlängerungselement eine Profilschiene ist, die in einen Längsträger des Fahrzeuges einschiebbar ist oder diesen umgreift und daß die Profilschiene mit dem Längsträger verbindbar ist. Die Verbindung mit den Längsträgern als tragende Karosserieteile ermöglicht es, hohe Kräfte über den Träger einzuleiten.

Eine sichere Befestigung der Befestigungsvorrichtung ist dadurch gegeben, daß das Verlängerungselement mit dem Längsträger verschraubt oder verschweißt ist.

Vorteilhafterweise ist die Befestigungsvorrichtung am Unterboden des Fahrzeuges angebracht; dann ist beispielsweise vorgesehen, daß die Kopplungsvorrichtung für die Stützstrebe an dem Längsträger des Fahrzeuges senkrecht nach unten abstehend befestigt ist.

Um den Träger schnell und mit wenigen Handgriffen an der Befestigungsvorrichtung befestigen zu können, ist vorgesehen, daß der Träger mittels eines Schnellverschlusses oder einer Schraubverbindung mit dem Verlängerungselement lösbar verbindbar ist.

Eine Ausgestaltung einer Hecktragvorrichtung ist dadurch gekennzeichnet, daß die Kopplungsvorrichtung eine Lasche mit einem Durchbruch aufweist, in den ein an der Stützstrebe angeordneter Bolzen einführbar und mit einem Splint oder einer Schraubverbindung festlegbar ist, oder daß umgekehrt der Durchbruch an der Stützstrebe und der Bolzen an der Kopplungsvorrichtung vorgesehen ist. Damit läßt sich die Stützstrebe einfach an- bzw. abbauen. Ist eine Schraubenverbindung zur Sicherung der Stützstrebe an der Lasche vorgesehen, so ist vorteilhafterweise eine selbstsichernde Mutter verwendet.

Damit der Heckträger leicht be- und entladbar ist, ist vorgesehen, daß der Träger mittels eines Gelenkmechanismus zumindest teilweise auf die Fahrbahnoberfläche absenkbar oder abklappbar ist.

Ist das Fahrzeug mit einer Anhängerkupplung ausgestattet, so ist vorgesehen, daß die Kopplungsvorrichtung ein Teil, beispielsweise eine Kugelkopfaufnahme aufweist, das an einer Anhängerkupplung befestigbar ist. Damit kann die Heckträgervorrichtung hohe Belastungen aufnehmen.

In diesem Fall ist es vorteilhaft, wenn auch vorgesehen ist, daß die Kopplungsvorrichtung einen Ansatz aufweist, mit dem sie in den Längsträger des Fahrzeuges einschiebbar ist oder diesen umgreift, und daß die Kopplungsvorrichtung am Längsträger befestigbar ist.

Eine Möglichkeit, die Stützstreben schnell und einfach von der Kopplungavorrichtung zu lösen oder mit dieser zu verbinden, ist dadurch gegeben, daß mit der Kopplungsvorrichtung eine mindestens eine Lasche tragende Adapterhülse lösbar verbindbar ist, und daß die Stützstreben mit den Laschen verbindbar sind.

Um zusätzlich zu einem Kofferraum des Fahrzeuges noch weiteren Stauraum bereitzustellen, ist vorgesehen, daß auf dem Träger Befestigungsaufnahmen zur Befestigung einer Kiste vorgesehen sind.

Bei einigen Ausgestaltungen ist es dann von Vorteil, wenn vorgesehen ist, daß die Kiste verschließbar und wasserdicht ist.

Eine bevorzugte Ausgestaltungsvariante ist dadurch gekennzeichnet, daß auf dem Träger Haltevorrichtungen befestigbar sind, an denen Fahrräder oder dgl. befestigbar sind. Damit können beispielsweise Sportgeräte einfach und bequem mit dem Fahrzeug mitgeführt werden.

Wird durch die auf dem Träger transportierten Gegenstände die Beleuchtungseinrichtung des Fahrzeuges oder das Fahrzeugkennzeichen verdeckt, so ist aus Gründen der Verkehrssicherheit vorgesehen, daß an dem Träger auf der dem Heck des Fahrzeuges abgewandten Seite eine Einheit befestigbar ist, die eine Beleuchtungseinrichtung und/oder ein Fahrzeugkennzeichen trägt.

Eine Ausgestaltung eines Heckträgers ist dadurch gekennzeichnet, daß mittels am Träger angebrachter Verstellvorrichtungen eine Anpassung des Trägers an verschiedene Fahrzeugtypen möglich ist.

Die Erfindung wird im folgenden anhand von in den Zeichnungen dargestellten Ausführungsbeispielen für Hecktragvorrichtungen näher erläutert. Es Zeigen:
- Fig. 1: das Heck eines Personenkraftfahrzeuges in Seitenansicht mit einer an den Längsträgern befestigten Hecktragvorrichtung,
- Fig. 2: eine Detailzeichnung der Verbindung Längsträger - Befestigungsvorrichtung nach Fig. 1,
- Fig. 3: in Seitenansicht das Heck eines Personenkraftfahrzeuges mit einer Anhängerkupplung und einer Hecktragvorrichtung und
- Fig. 4: das Personenkraftfahrzeug nach Fig. 3 in Draufsicht.

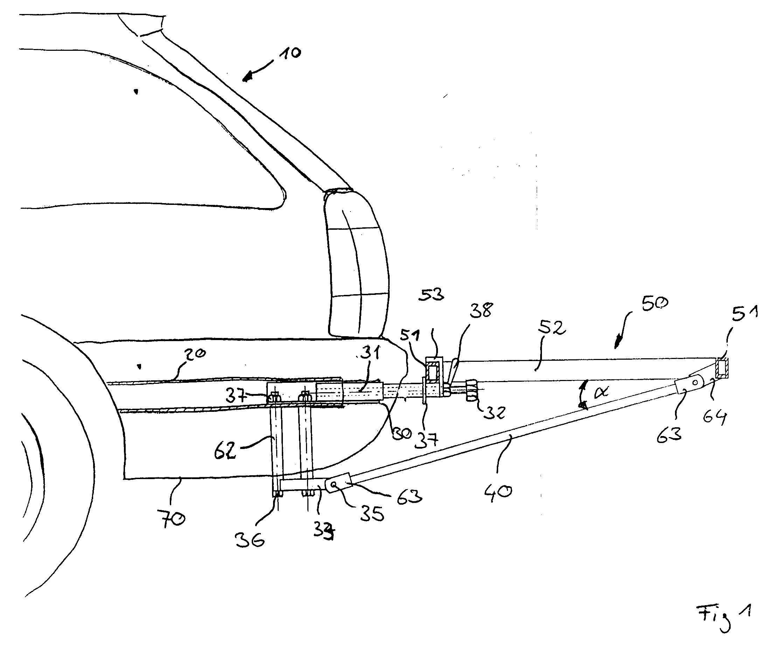

In Fig. 1 ist das Heck eines Personenkraftfahrzeuges 10 dargestellt. Im Bereich des Unterbodens des Personenkraftfahrzeuges 10 ist in einen Längsträger 20 ein als Profilschiene ausgebildetes Verlängerungselement 30 eingeschoben. An der Unterseite des Längsträgers 20 sind zwei parallel zueinander stehende Hülsen 62 angeordnet, die über eine Kopplungsvorrichtung 33 miteinander verbunden sind. In die beiden Hülsen 62 ist je eine Befestigungsschraube 36 eingeführt und durch entsprechende Durchbrüche des Längsträgers 20 und des Verlängerungselementes 30 gesteckt. Auf dem Verlängerungselement 30 sind zwei als Muttern ausgebildete Schraubaufnahmen 37 aufgeschweißt, in denen die Befestigungsschrauben 36 eingeschraubt sind. Die Kopplungsvorrichtung 33 weist an ihrem der Rückseite des Personenkraftfahrzeuges 10 zugekehrten Endbereich eine Bohrung 35 auf. Der Endbereich ist von einem an einer Stützstrebe 40 angebrachten Gabelkopf 63 übergriffen. In die Schenkel des Gabelkopfes 63 sind Bohrungen eingebracht, die fluchtend zu der Bohrung 35 der Kopplungsvorrichtung 33 ausgerichtet sind, so daß ein Bolzen einführbar ist. Der Bolzen wird beispielsweise mittels eines Splintes gesichert gehalten, so daß die Stützstrebe 40 gesichert gehalten ist. An dem der Befestigungsvorrichtung 33 abgekehrten Ende der Stützstrebe 40 ist ein weiterer Gabelkopf 63 angebracht. Der Gabelkopf 63 ist mit einer an einem Träger 50 angeordneten Lasche 64 verbunden.

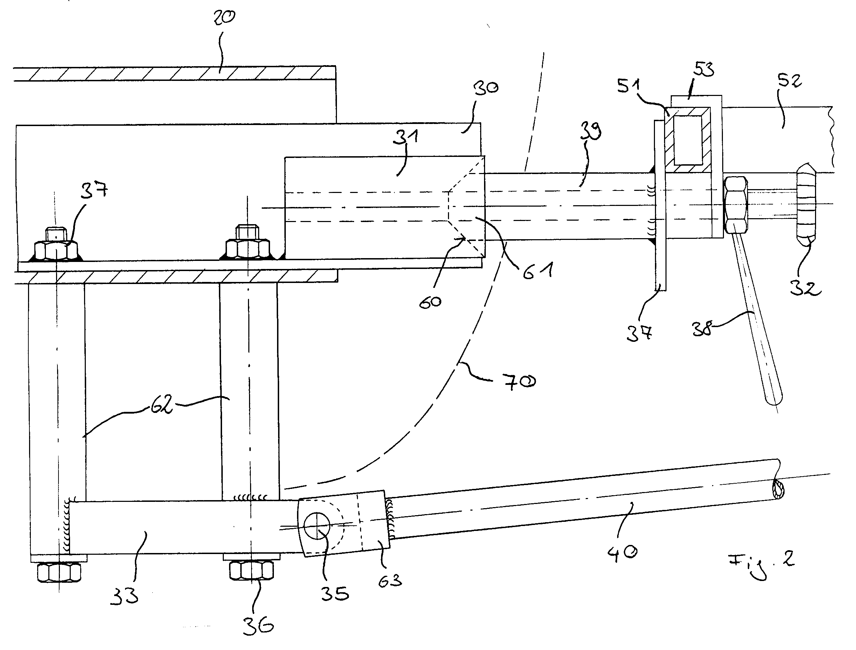

Auf dem Verlängerungselement 30 ist, wie dies auch in Fig. 2 dargestellt, eine Gewindehülse 31 angeschweißt, wobei die Achse der Gewindeaufnahme in Richtung der Fahrzeuglängsachse ausgerichtet ist. Das der Rückseite des Personenkraftfahrzeuges 10 zugekehrte Ende der Gewindeaufnahme ist zu einer konischen Aufnahme 60 erweitert. In diese Aufnahme 60 ist ein an einer Hülse 39 angeordneter Konus 61 zentriert eingesetzt. In die Hülse 39 ist eine Befestigungsschraube 32 eingeführt und in der Gewindeaufnahme der Gewindehülse 31 eingeschraubt. Auf der Hülse 39 ist eine Stützscheibe 37 aufgeschweißt, die als Anschlag für eine rechteckförmige Querstrebe 51 des Trägers 50 dient. Die Querstrebe 51 ist von einem Winkel 53 umgriffen. Der Winkel 53 ist mit einer Bohrung versehen, so daß er auf der Befestigungsschraube 32 axial gegen die Querstrebe 51 mittels einer Knebelmutter verstellbar ist. Der Träger 50 ist also an seiner Vorderseite mittels der Befestigungsschraube 32 an dem Verlängerungselement 30 gehalten. An der Rückseite ist der Träger 50 mittels der im Winkel angeordneten Stützstrebe abgestützt, so daß große Lasten auch auf dem rückwärtigen Ende des Trägers 50 transportiert werden können.

Um den Träger 50 auf Fahrbahnoberfläche abklappen zu können, wird die Knebelmutter 38 gelöst. Damit gibt der Winkel 53 die Querstrebe 51 frei, so daß diese sich verdrehen kann. Anschließend kann die Stützstrebe 40 am Träger 50 gelöst werden, so daß dieser nach unten abklappbar ist. Um auch bei beladenem Träger 50 ein einfaches Abklappen zu ermöglichen, ist es auch möglich, einen in der Zeichnung nicht dargestellten Fuß auszuklappen. Dann kann der Träger 50 an der Knebelmutter 38 gelöst und die Stützstrebe 40 entfernt werden, so daß sich der Träger 50 nurmehr auf dem Fuß abstützt. Dann kann der Träger 50 leicht, beispielsweise auch mit einer nach hinten ausklappbaren Hebelverlängerung auf die Fahrbahnoberfläche abgelassen werden. Um die Stützstrebe 40 spielfrei zu verspannen, ist diese beispielsweise auch zweigeteilt. Die beiden Teile sind dann mittels eines Gewindes miteinander verbunden, so daß eine Längenverstellung möglich ist. Der Kopf der Befestigungsschraube 32 ist als Handknauf ausgebildet, auf die Verwendung eines Werkzeuges kann dann verzichtet werden.

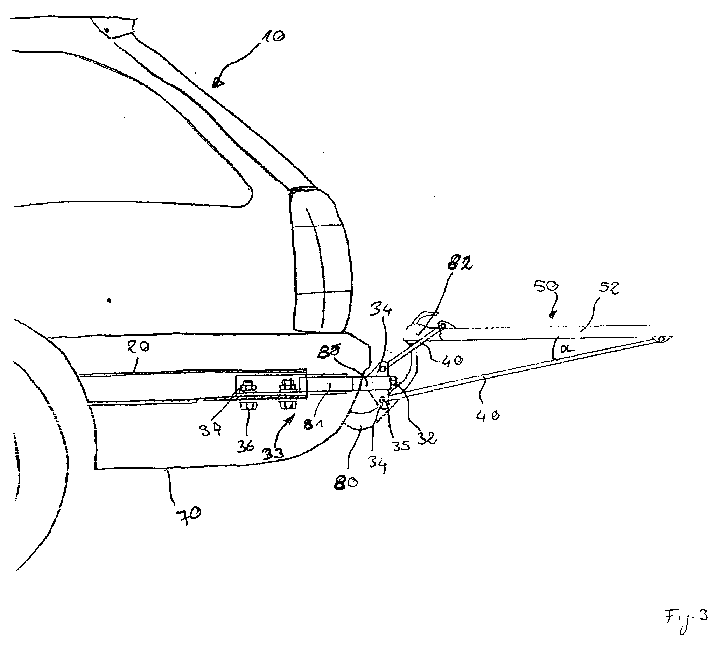

In Fig. 3 ist als weiteres Ausführungsbeispiel eine Hecktragvorrichtung für ein Personenkraftfahrzeug 10 mit einer Anhängerkupplung 80 dargestellt. An dem Träger 50 ist eine Kugelkopfaufnahme 81 angebracht, die den Kugelkopf der Anhängerkupplung 80 umgreift und festlegt. In den Längsträger 20 ist eine als Profilschiene ausgebildete Kopplungsvorrichtung 33 eingeschoben und mittels zweier Befestigungsschrauben 36 mit diesem verbunden. An der dem Längsträger 20 abgekehrten Seite der Profilschiene ist eine Gewindehülse 81 mit einer Gewindeaufnahme angeschweißt. In einer Schraubenaufnahme einer Adapterhülse 88 ist eine Befestigungsschraube 32 eingeführt und in die Gewindeaufnahme der Gewindehülse 81 eingeschraubt. Die Adapterhülse 88 weist zwei zueinander um 180° versetzte Laschen 34 auf, in die jeweils eine Bohrung 35 eingebracht ist. In der Bohrung 35 ist jeweils eine Stützstrebe 40 festgelegt. Die freien Enden der Stützstreben 40 sind mit dem Träger 50 verbunden.

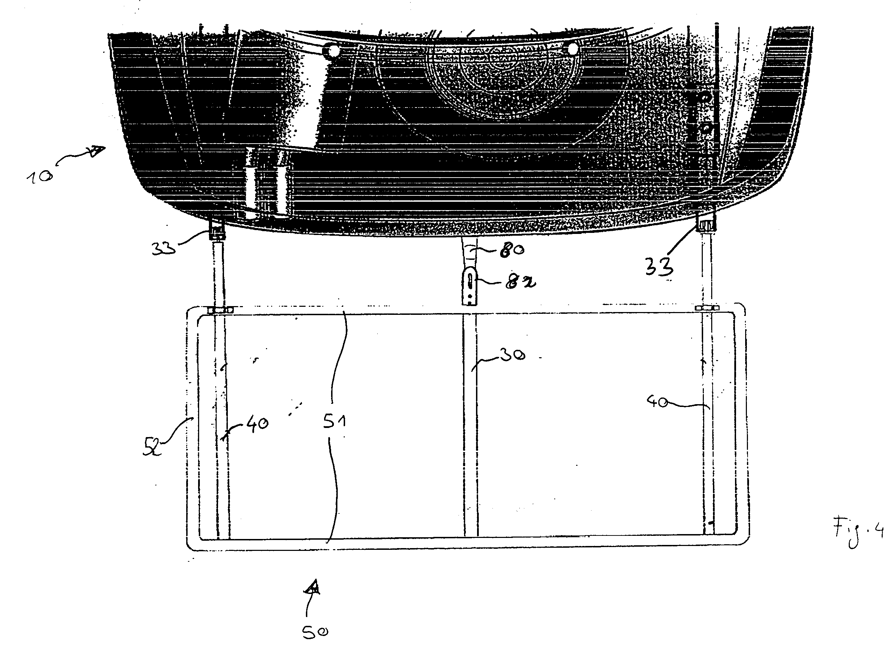

In Fig. 4 ist die Hecktragvorrichtung nach Fig. 3 in Draufsicht dargestellt. Der Träger 50 ist aus Quer- 51 und Längsstreben 52 zusammengesetzt, die an ihren Enden miteinander zu einem rahmenartigen Traggestell verbunden sind. Auf dem Kugelkopf der Anhängerkupplung 80 ist die Kugelaufnahme 82 aufgesetzt und verriegelt. Mit der Kugelkopfaufnahme 82 ist ein Verlängerungselement 30 verbunden, das mit seinem freien Ende mit der hinteren Querstrebe 51 verbunden ist. Weitere Quer- und/oder Längsstreben 51, 52 können vorgesehen sein.

Wie aus der Fig. 4 weiter ersichtlich ist, sind an beiden Seiten des Personenkraftfahrzeuges 10 Kopplungsvorrichtungen 33 für Stützstreben 40 befestigt, so daß insgesamt vier Stützstreben 40 die Tragfunktion des Trägers 50 unterstützen.

In der Fig. 1 ist eine Hecktragvorrichtung mit einer Stützstrebe 40 dargestellt. Es ist aber auch denkbar, beidseitig an den Längsträgern 20 eines Fahrzeuges Kopplungsvorrichtungen 33 für Stützstreben 40 vorzusehen. Diese Stützstreben sind dann beispielsweise mit ihren freien Enden mit den jeweiligen rückseitigen Enden der Längsstreben 52 des Trägers 50 verbunden.

Die Anbringung der Befestigungsvorrichtung und der Kopplungsvorrichtung 33 für die Stützstreben am Fahrzeug ist vorteilhaft auch an jedem anderen tragenden Teil der Fahrzeugkarosserie möglich. Es bietet sich aus optischen Gründen eine Beschränkung auf den Unterbodenbereich des Fahrzeuges an. Beispielhaft sind an dieser Stelle als Befestigungsstellen der Stoßfänger, die Befestigungsstellen für Pralldämpfer oder Stoßdämpfer, die Abschleppvorrichtung usw. angeführt.

## Patentansprüche

1. Hecktragvorrichtung, insbesondere für Personenkraftfahrzeuge, bei denen eine über die Rückseite in Richtung der Fahrzeuglängsachse hinausragende Befestigungsvorrichtung mit mindestens einem Verlängerungselement im Heckbereich anbringbar ist, wobei an den Verlängerungselementen quer zur Fahrzeuglängsachse ein Träger angebracht ist, der zur Aufnahme von Fahrrädern, Lasten usw. dient,
dadurch gekennzeichnet,
daß mindestens eine, am Fahrzeug (10) angeordnete, in Richtung der Fahrzeughöhe von der oder den Befestigungsstellen der Befestigungsvorrichtung beabstandete Kopplungsvorrichtung (33) vorgesehen ist, an der mindestens eine Stützstrebe (40) festlegbar ist,
daß die Stützstrebe (40) mit ihrem der Kopplungsvorrichtung (33) abgewandeten Endbereich mit dem Verlängerungselement (30) und/oder dem Träger (50) verbindbar ist, und
daß der Träger (50) dabei an mindestens zwei in Querrichtung voneinander versetzten Stellen des Fahrzeuges befestigt ist.

2. Hecktragvorrichtung nach Anspruch 1,
dadurch gekennzeichnet,
daß das Verlängerungselement (30) eine Profilschiene ist, die in einen Längsträger (20) des Fahrzeuges (10) einschiebbar ist oder diesen umgreift und
daß die Profilschiene mit dem Längsträger (20) verbindbar ist.

3. Hecktragvorrichtung nach Anspruch 1 oder 2,
dadurch gekennzeichnet,
daß das Verlängerungselement (30) mit dem Längsträger (20) verschraubt oder verschweißt ist.

4. Hecktragvorrichtung nach einem der Ansprüche 1 bis 3,
dadurch gekennzeichnet,
daß die Kopplungsvorrichtung (33) für die Stützstrebe (40) an dem Längsträger (20) des Fahrzeuges (10) senkrecht nach unten abstehend befestigt ist.

5. Hecktragvorrichtung nach einem der Ansprüche 1 bis 4,
dadurch gekennzeichnet,
daß der Träger (50) mittels eines Schnellverschlusses oder einer Schraubverbindung mit dem Verlängerungselement (30) lösbar verbindbar ist.

6. Hecktragvorrichtung nach einem der Ansprüche 1 bis 5,
dadurch gekennzeichnet,
daß die Kopplungsvorrichtung (33) eine Lasche (34) mit einem Durchbruch (35) aufweist, in den ein an der Stützstrebe (40) angeordneter Bolzen einführbar und mit einem Splint oder einer Schraubverkleidung festlegbar ist, oder
daß umgekehrt der Durchbruch an der Stützstrebe (40) und der Bolzen an der Kopplungsvorrichtung (33) vorgesehen ist.

7. Hecktragvorrichtung nach einem der Ansprüche 1 bis 6,
dadurch gekennzeichnet,
daß der Träger (50) mittels eines Gelenkmechanismus zumindest teilweise auf die Fahrbahnoberfläche absenkbar oder abklappbar ist.

8. Hecktragvorrichtung nach einem der Ansprüche 1 bis 7,
dadurch gekennzeichnet,
daß die Befestigungsvorrichtung ein Teil, beispielsweise eine Kugelkopfaufnahme (61) aufweist, das an einer Anhängerkupplung (60) befestigbar ist.

9. Hecktragvorrichtung nach einem der Ansprüche 1 bis 8,
dadurch gekennzeichnet,
daß die Kopplungsvorrichtung (33) einen Ansatz aufweist, mit dem sie in den Längsträger (20) des Fahrzeuges (10) einschiebbar ist oder diesen umgreift, und daß die Kopplungsvorrichtung (33) am Längsträger befestigbar ist.

10. Hecktragvorrichtung nach einem der Ansprüche 1 bis 9,
dadurch gekennzeichnet,
daß mit der Kopplungsvorrichtung (33) eine mindestens eine Lasche (34) tragende Adapterhülse (88) lösbar verbindbar ist, und daß mit den Laschen (34) Stützstreben (40) verbindbar sind.

11. Hecktragvorrichtung nach einem der Ansprüche 1 bis 10,
dadurch gekennzeichnet,
daß auf dem Träger (50) Befestigungsaufnahmen zur Befestigung einer Kiste vorgesehen sind.

12. Hecktragvorrichtung nach Anspruch 11,
dadurch gekennzeichnet,
daß die Kiste verschließbar und wasserdicht ist.

13. Hecktragvorrichtung nach einem der Ansprüche 1 bis 12,
dadurch gekennzeichnet,
daß auf dem Träger (50) Haltevorrichtungen befestigbar sind, an denen Fahrräder oder dgl. befestigbar sind.

14. Hecktragvorrichtung nach einem der Ansprüche 1 bis 13,
dadurch gekennzeichnet,
daß an dem Träger (50) auf der dem Heck des Fahrzeuges (10) abgewandten Seite eine Einheit befestigbar ist, die eine Beleuchtungseinrichtung und/oder ein Fahrzeugkennzeichen trägt.

15. Hecktragvorrichtung nach einem der Ansprüche 1 bis 14,
dadurch gekennzeichnet,
daß mittels am Träger (50) angebrachter Verstellvorrichtungen eine Anpassung des Trägers (50) an verschiedene Fahrzeugtypen möglich ist.
